# EUROPÄISCHE PATENTSCHRIFT

(11) **EP 2 809 558 B1**
(45) Veröffentlichungstag und Bekanntmachung des Hinweises auf die Patenterteilung: **28.09.2016**
(21) Anmeldenummer: 13703020.1
(22) Anmeldetag: 04.02.2013
(51) Int. Cl.: B60T 1/087, F16D 57/02

(54) **HYDRODYNAMISCHER RETARDER**
HYDRODYNAMIC RETARDER
RALENTISSEUR HYDRODYNAMIQUE

(30) Priorität: 03.02.2012 DE 102012002038
(43) Veröffentlichungstag der Anmeldung: 10.12.2014
(73) Patentinhaber: Voith Patent GmbH, 89522 Heidenheim (DE)
(72) Erfinder: LAUKEMANN, Dieter, 74564 Crailsheim (DE)
(74) Vertreter: Dr. Weitzel & Partner
(86) Internationale Anmeldenummer: PCT/EP2013/052130
(87) Internationale Veröffentlichungsnummer: WO 2013/113919

(56) Entgegenhaltungen:
- DE-A1- 1 805 329
- DE-A1- 3 545 658
- DE-A1- 3 930 540

## Beschreibung

Die vorliegende Erfindung betrifft einen hydrodynamischen Retarder, im Einzelnen gemäß dem Oberbegriff von Anspruch 1. Ein solcher Retarder ist aus DE 3930540 A bekannt. Ferner betrifft die vorliegende Erfindung ein Verfahren zum Herstellen eines solchen Retarders.

Hydrodynamische Retarder weisen einen mit einem Arbeitsmedium befüllbaren und davon entleerbaren Arbeitsraum auf, um Drehmoment von einem beschaufelten Primärrad, auch Rotor genannt, auf ein Sekundärrad, auch Stator genannt, zu übertragen. Bei befülltem Arbeitsraum wird das Primärrad und damit eine insbesondere mit dem Primärrad drehfest ausgeführte Welle, beispielsweise eine indirekt mit den Rädern eines Fahrzeugs verbundenen Gelenkwelle oder Getriebeabtriebswelle, verzögert.

Herkömmlich werden hydrodynamische Retarder durch einen externen Öl- oder Wasserkühlkreiskauf gekühlt, um die im Bremsbetrieb anfallende Wärme aus diesem abzuleiten. Dabei verbleibt das Arbeitsmedium nicht permanent innerhalb des hydrodynamischen Retarders, beispielsweise in einem Arbeitsraum oder in einem Vorratsraum, auch Verzögerungskammer genannt, sondern wird einem externen Kühlkreislauf zugeführt. Im letzteren ist zur Aufnahme von momentan nicht im Arbeitsraum befindlichen Arbeitsmediums ein Arbeitsmediumbehälter vorgesehen. Der hydrodynamische Retarder weist dabei einen ersten Arbeitsmediumanschluss zum Zuführen von Arbeitsmedium in den Arbeitsraum und einen zweiten Arbeitsmediumanschluss zum Abführen desselben hieraus auf. Der Arbeitsmediumbehälter umfasst einen Auslass, der zum Befüllen des Arbeitsraums über den externen Kühlkreislauf mit dem ersten Arbeitsmediumanschluss verbunden ist, und einen Einlass zum Abführen des Arbeitsmediums aus dem Arbeitsraum, der über den externen Kühlkreislauf mit dem zweiten Arbeitsmediumanschluss verbunden ist. Somit kann Arbeitsmedium aus dem Arbeitsmediumbehälter in den hydrodynamischen Retarder beziehungsweise dessen Arbeitsraum geleitet und anschließend aus dem Arbeitsraum beziehungsweise dem hydrodynamischen Retarder über den externen Kühlkreislauf wieder in den Arbeitsmediumbehälter zurückgeführt werden.

Herkömmlich werden derartige Arbeitsmediumbehälter aus verschiedenen Gehäuseteilen im Sandgussverfahren hergestellt und am Retardergehäuse, das ebenfalls aus mehreren Teilen im Sandgussverfahren hergestellt wird, angeschlossen. Die Gehäuseteile umfassen Kanäle zur Arbeitsmediumführung, die durch Einbringen von Kernen in die Sandgussform, welche nach dem Gießvorgang zerstört werden, gebildet werden. Nachteilig hieran ist der erhebliche Herstellungs- und damit Kostenaufwand derart hergestellter Retarder mit Arbeitsmediumbehälter.

DE 1 805 329 beschreibt eine hydrodynamische Bremse mit einem Statorgehäuse, welches zugleich einen Einlass für Arbeitsmedium in den Arbeitsraum bildet. Dabei stehen sich innerhalb des Gehäuses ein Rotor sowie ein Stator der hydrodynamischen Bremse in Radialrichtung gegenüber.

Der vorliegenden Erfindung liegt die Aufgabe zugrunde, einen hydrodynamischen Retarder anzugeben, welcher die oben genannten Nachteile vermeidet.
Insbesondere soll ein hydrodynamischer Retarder mit einem Arbeitsmediumbehälter angegeben werden, bei welchem der Herstellungsaufwand und die damit eingehenden Herstellungskosten reduziert sind.

Die erfindungsgemäße Aufgabe wird durch einen hydrodynamischen Retarder gemäß dem unabhängigen Anspruch gelöst. Die abhängigen Ansprüche stellen vorteilhafte und besonders zweckmäßige Ausgestaltungen der Erfindung dar. Ferner wird ein Verfahren zum Herstellen des Retarders angegeben.

Ein erfindungsgemäßer hydrodynamischer Retarder umfasst einen beschaufelten Rotor und einen beschaufelten Stator, die miteinander einen mit Arbeitsmedium befüllbaren und davon entleerbaren Arbeitsraum ausbilden, mit wenigstens einem ersten Arbeitsmediumanschluss zum Zuführen von Arbeitsmedium in den Arbeitsraum und einem zweiten Arbeitsmediumanschluss zum Abführen von Arbeitsmedium aus dem Arbeitsraum. Ferner ist ein Arbeitsmediumbehälter vorgesehen, der ein Arbeitsmediumvorratsvolumen zur Aufnahme von momentan nicht im Arbeitsraum befindlichen Arbeitsmedium begrenzt, wobei der Arbeitsmediumbehälter einen Auslass aufweist, der über wenigstens eine Leitung mit dem ersten Arbeitsmediumanschluss arbeitsmediumleitend verbunden ist, und ferner einen Einlass, der mit dem zweiten Arbeitsmediumanschluss über wenigstens eine Leitung arbeitsmediumleitend verbunden ist. Der Arbeitsmediumbehälter ist aus wenigstens zwei Gehäuseteilen hergestellt, welche entlang wenigstens einer Teilfuge zusammengefügt sind.

Die beiden Gehäuseteile umschließen gemeinsam das Arbeitsmediumvorratsvolumen und insbesondere weitere Leitungen oder Verbindungen, die dem Leiten des Arbeitsmediums zwischen dem Arbeitsraum und dem Arbeitsmediumvorratsvolumen, zwischen dem Arbeitsraum und einem Wärmetauscher zur Kühlung des Arbeitsmediums und/oder zwischen dem Arbeitsmediumvorratsvolumen und dem Wärmetauscher dienen.

Wenigstens eines der beiden Gehäuseteile bildet zugleich einen Teil eines Retardergehäuses, das den Stator trägt oder teilweise oder vollständig ausbildet und alle oder einen Teil der arbeitsmediumleitenden Verbindungen zwischen dem Arbeitsmediumvorratsvolumen und dem Arbeitsraum wenigstens teilweise oder vollständig ausbildet.

Erfindungsgemäß ist zwischen den beiden Gehäuseteilen eine Trennplatte eingelegt, welche zusammen mit einem oder beiden Gehäuseteilen Hohlräume für die arbeitsmediumleitenden Verbindungen und/oder das Arbeitsmediumvorratsvolumen ausbildet. Eingelegt bedeutet in dem Sinne der vorliegenden Erfindung, dass die Trennplatte separat zu den beiden Gehäuseteilen hergestellt wird und beispielsweise bei der Montage lose auf eines der Gehäuseteile aufgelegt wird und in zusammengebautem Zustand des hydrodynamischen Retarders bevorzugt nur durch Klemmen der beiden Gehäuseteile gegeneinander in ihrer Position gehalten wird. Neben einem solchen Formschluss kann die Trennplatte nach dem Einlegen zwischen die beiden Gehäuseteile auch stoff- oder kraftschlüssig an wenigstens einem der Gehäuseteile befestigt werden, wenn gewünscht.

Gemäß einer Ausführungsform verläuft die Teilfuge in Einbaulage des hydrodynamischen Retarders im Wesentlichen oder vollständig vertikal. In Einbaulage befindet sich die Drehachse des hydrodynamischen Retarders, um die beispielsweise der Rotor rotiert, in der Regel in waagrechter Position. Damit verläuft die Teilfuge in einer Ebene, die senkrecht oder im Wesentlichen senkrecht auf der Drehachse des hydrodynamischen Retarders steht.

Der Rotor und der Stator des hydrodynamischen Retarders stehen sich bevorzugt in Axialrichtung gegenüber.

Die beiden Gehäuseteile können schalenförmig ausgebildet sein.

Bevorzugt sind die Gehäuseteile durch Urformen, insbesondere in einem einzigen Arbeitsschritt, einem einzigen Werkzeug und/oder einer einzigen Maschine hergestellt. Hierdurch kann eine besonders rationelle Fertigung zur Verfügung gestellt werden, wodurch die Herstellungskosten und der Herstellungsaufwand sinken.

Die Gehäuseteile können im Druckgussverfahren hergestellt sein, wobei nun keine Kerne mehr verwendet werden müssen, da die Hohlräume zur Führung oder Aufnahme des Arbeitsmediums von den Gehäuseteilen des Arbeitsmediumbehälters zusammen begrenzt werden.

Wenn der Retarder einen Wärmetauscher zur Kühlung des Arbeitsmediums aufweist, so kann eines der beiden Gehäuseteile, nämlich in der Regel der sogenannte andere Gehäuseteile, das ist jener, der nicht gleichzeitig das Retardergehäuse ausbildet, oder es können beide Gehäuseteile des Arbeitsmediumbehälters wenigstens eine, mehrere oder alle arbeitsmediumleitende Verbindungen zwischen dem Arbeitsraum und einem Wärmetauschereinlass des Wärmetausches herstellen und/oder wenigstens eine arbeitsmediumleitende Verbindung, mehrere Verbindungen oder alle Verbindungen zwischen einem Wärmetauscherauslass des Wärmetauschers und dem Arbeitsmediumvorratsvolumen ausbilden.

Günstig ist es ferner, wenn der Wärmetauscher von außen an dem anderen Gehäuseteil angeschlossen ist und insbesondere von diesem getragen wird.

Eine erfindungsgemäße Ausführungsform sieht vor, dass eines der beiden Gehäuseteile, insbesondere das andere Gehäuseteil, das dem einen Teil des Retardergehäuses ausbildenden Gehäuseteil gegenübersteht, wenigstens einen Anschluss für ein Steuerdruckbeaufschlagungssystem und wenigstens eine Leitung für ein Steuerdruckmedium zur Beaufschlagung des Arbeitsmediumvorratsvolumens mit einem Steuerdruck ausbildet. Günstig ist, wenn in der wenigstens einen Leitung für das Steuerdruckmedium ein Arbeitsmediumabscheider vorgesehen ist. Der Arbeitsmediumabscheider kann vorteilhaft durch eines oder beide Gehäuseteile gebildet werden oder in ein Gehäuseteil oder beide Gehäuseteile des Arbeitsmediumbehälters eingesetzt sein.

Eine Ausführungsform sieht vor, dass das Retardergehäuse neben dem durch das eine Gehäuseteil des Arbeitsmediumbehälters gebildeten Teils wenigstens ein zweites Teil aufweist, das an einem der beiden Gehäuseteile des Arbeitsmediumbehälters angeschlossen ist und das den Rotor umschließt. Insbesondere ist das Retardergehäuse genau aus diesen beiden Teilen gebildet.

Zwischen den Gehäuseteilen des Arbeitsmediumbehälters kann wenigstens eine Dichtung eingebracht sein, um einzelne Hohlräume gegeneinander abzudichten. Eine solche Dichtung kann beispielsweise in Form der Trennplatte ausgebildet sein.

Ein erfindungsgemäßes Verfahren sieht vor, dass ein Retarder der zuvor beschriebenen Art, der neben dem Arbeitsraum, gebildet durch die sogenannten Kreislaufteile (Rotor und Stator), einen Arbeitsmediumbehälter zur Aufnahme des Arbeitsmediumvorratsvolumens aufweist, durch Ausbilden der beiden Gehäuseteile des Arbeitsmediumbehälters und insbesondere der Teile des Retardergehäuses im Druckgussverfahren hergestellt ist, beispielsweise aus Aluminium oder einer Aluminiumlegierung.
Obwohl vorliegend stets dargestellt wurde, dass der Arbeitsmediumbehälter aus zwei, insbesondere genau zwei Gehäuseteilen hergestellt ist, können auch mehr Gehäuseteile vorgesehen sein.

Die Erfindung soll nun anhand einer beispielhaften Ausführungsform und den beigefügten Figuren erläutert werden.

Es zeigen:
- Figur 1: eine schematische Darstellung eines in einem externen Kühlkreislauf angeordneten hydrodynamischen Retarders;
- Figur 2: eine bevorzugte Ausführungsform eines Arbeitsmediumbehälters des hydrodynamischen Retarders;
- Figur 3: die Ausführungsform in einer anderen Explosionsdarstellung.

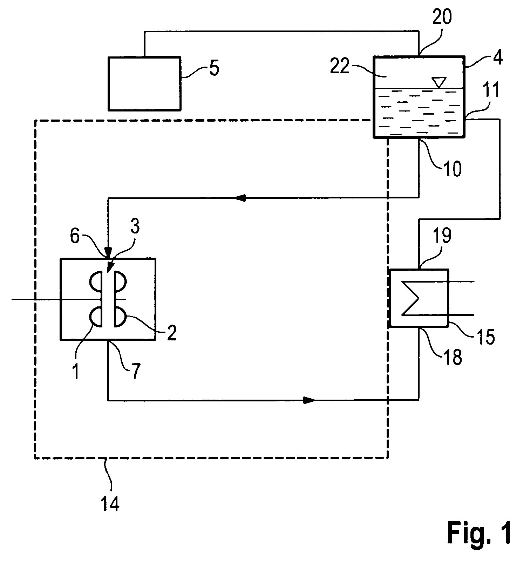

In Figur 1 ist eine schematische Darstellung eines in einem externen Kühlkreislauf angeordneten hydrodynamischen Retarders dargestellt. Letzterer umfasst ein beschaufeltes und umlaufendes Primärrad, als Rotor 1 bezeichnet, sowie ein stationäres, nicht umlaufendes und ebenfalls beschaufeltes Sekundärrad, als Stator 2 bezeichnet. Rotor 1 und Stator 2 bilden zusammen einen torusförmigen Arbeitsraum 3 aus. Ferner ist ein Arbeitsmediumbehälter 4 zur Bevorratung von momentan nicht im Arbeitsraum 3 befindlichem Arbeitsmedium vorgesehen. Als Arbeitsmedium kann Öl, Wasser oder ein Wassergemisch dienen. Der dargestellte externe Kühlkreislauf kann gleichzeitig ein Kühlkreislauf eines Fahrzeugs wie Nutzfahrzeugs oder Schienenfahrzeugs sein, sodass das Kühlmedium des Kühlkreislaufs zugleich das Arbeitsmedium des hydrodynamischen Retarders ist.

Der Arbeitsmediumbehälter 4 umfasst einen Auslass 10, welcher über eine strömungsleitende Verbindung mit einem ersten Arbeitsmediumanschluss 6 zum Zuführen von Arbeitsmedium aus dem Arbeitsmediumbehälter 4 in den Arbeitsraum 3 des hydrodynamischen Retarders verbunden ist. Zum Austragen von Arbeitsmedium aus dem Arbeitsraum 3 umfasst der hydrodynamische Retarder einen zweiten Arbeitsmediumanschluss 7, welcher mit einem Einlass 11 des Arbeitsmediumbehälters 4 strömungsleitend verbunden ist.

Im Kühlkreislauf ist in Strömungsrichtung des Arbeitsmediums gesehen hinter dem hydrodynamischen Retarder ein Wärmetauscher 15 zur Abführung von Wärme aus dem Arbeitsmedium angeordnet. Wärmetauscher 15 kann bei dem Arbeitsmedium Öl als Öl-Wasser-Wärmetauscher ausgeführt und zur Abführung von Wärme aus dem Arbeitsmedium wärmeübertragend an einen nicht dargestellten Kühlkreislauf eines Fahrzeugs angeschlossen sein. Der Wärmetausche 15 weist einen Wärmetauschereinlass 18 und einen Wärmetauscherauslass 19 auf und ist zwischen den zweiten Arbeitsmediumanschluss 7 und den Einlass 11 des Arbeitsmediumbehälters 4 geschaltet.

Der Arbeitsraum 3 ist mit Arbeitsmedium, welches in dem externen Kühlkreislauf zirkuliert, befüllbar und davon entleerbar. Die Befüllung des Arbeitsraumes 3 erfolgt durch Aufbringen eines unter Druck stehenden Steuerdruckmediums auf das im Arbeitsmediumbehälter 4 befindliche Arbeitsmedium. Die Entleerung erfolgt 8 durch Zurücknahme dieser Druckbeaufschlagung. Der Arbeitsmediumbehälter 4 ist teils mit Arbeitsmedium, beispielsweise Öl, und teils mit Steuerdruckmedium, wie Luft, befüllt, sodass ein Flüssigkeitsspiegel des Arbeitsmediums die Steuerdruckmediumseite von der Arbeitsmediumseite trennt. Auch könnte hier eine Trennung durch einen Kolben oder eine Membran vorgesehen sein. Zur Druckbeaufschlagung des Flüssigkeitsspiegels ist hier eine (einzige) strömungsleitende Verbindung zwischen dem Arbeitsmediumbehälter 4 und einem Steuerdruckbeaufschlagungssystem 5 vorgesehen. Die strömungsleitende Verbindung bildet hier einen Ein- und zugleich Auslass für das Steuerdruckmedium, welches in oder aus dem Arbeitsmediumbehälter 4 strömt.

Auch könnte eine weitere, parallel zu der strömungsleitenden Verbindung angeordnete Verbindungsleitung zwischen Steuerdruckbeaufschlagungssystem 5 und Arbeitsmediumbehälter 4 vorgesehen sein. In diesem Fall würde die weitere Verbindungsleitung zum Druckbeaufschlagen, also zum Zuführen von Steuerdruckmedium aus dem Steuerdruckbeaufschlagungssystem 5 über einen Einlass zum Arbeitsmediumbehälter 4 und die dargestellte strömungsleitende Verbindung zum Abführen des Steuerdruckmediums aus dem Arbeitsmediumbehälter 4 über den Auslass dienen.

Wie durch die gestrichelten Linien angedeutet, ist der hydrodynamische Retarder, genauer gesagt hier der Rotor 1 sowie der Stator 2 von einem Retardergehäuse 14 umschlossen. An letzterem kann der Arbeitsmediumbehälter 4 und/oder Wärmetauscher 15 befestigt sein. Das Retardergehäuse 14 kann, wie dargestellt, auch die Arbeitsmediumanschlüsse 6, 7 und die zu diesen führenden Leitungen umfassen oder ausbilden.

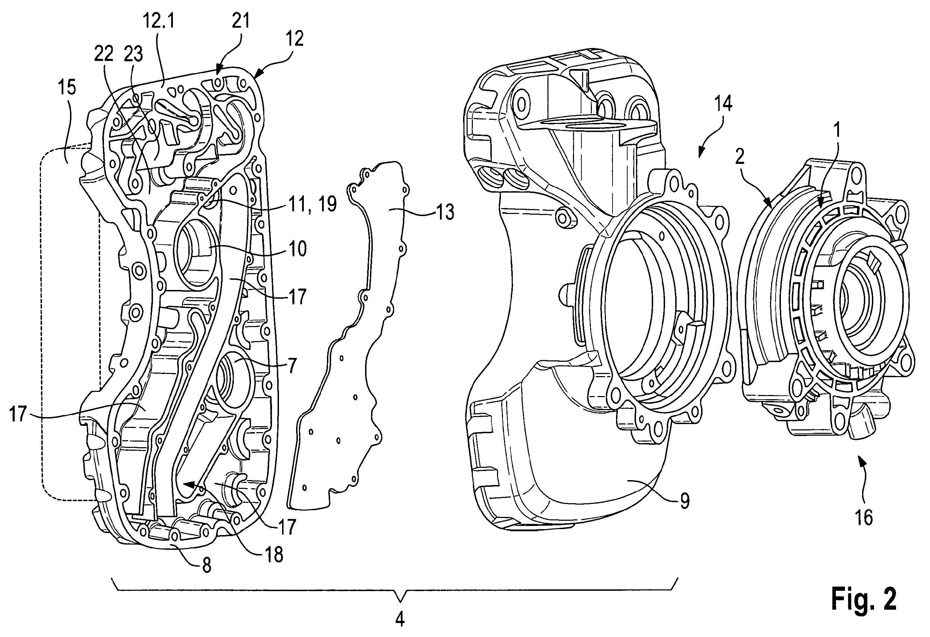

In der Figur 2 ist eine Ausführungsform des Arbeitsmediumbehälters 4 in einer Explosionsdarstellung gezeigt. Im vorliegenden Fall ist der Arbeitsmediumbehälter 4 aus zwei Gehäuseteilen 8, 9 entlang einer Teilfuge 12 zusammengefügt. Die einander zugewandten Stirnseiten der Gehäuseteile 8, 9 sind im vorliegenden Fall eben und liegen im zusammengebauten Zustand in einer, hier einzigen, gemeinsamen Trennebene 12.1. Dies muss jedoch nicht so sein, die Teilfuge 12 könnte auch Vorsprünge und/oder Rücknahmen aufweisen.

Die Teilfuge verläuft derart durch alle gemeinsam von den beiden Gehäuseteilen 8, 9 gebildeten Hohlräume, dass keine nach außen abgeschlossenen Hohlräume entstehen, die nicht von der Teilfuge 12 aus zugänglich sind. Vorteilhaft gibt es auch keine Hinterschneidungen, ausgehend von der Teilfuge 12. Dies schließt nicht aus, dass auf der der Teilfuge 12 abgewandten Stirnseite oder auf dem Umfang der einzelnen Gehäuseteile 8, 9 weitere von außen zugängliche Hohlräume vorgesehen sind, beispielsweise um Anschlüsse beziehungsweise Leitungen auszubilden. Dadurch ist eine Herstellung der Gehäuseteile 8, 9 im Druckgussverfahren möglich, beispielsweise im Aluminiumdruckgussverfahren, ohne verlorene Kerne.

Zwischen den beiden Gehäuseteilen 8, 9 ist eine Trennplatte 13 angeordnet, welche ebenfalls innerhalb oder parallel zu der Teilfuge 12 beziehungsweise Trennebene 12.1 verläuft. Die Trennplatte 13 kann zusammen mit einem oder beiden Gehäuseteilen 8, 9 entsprechende Hohlräume zur Aufnahme oder Führung von Arbeitsmedium ausbilden. Sie kann Öffnungen aufweisen, um bestimmte Hohlräume des einen Gehäuseteils 8 mit dem anderen Gehäuseteil 9 zu verbinden oder aber eine strömungsleitende Verbindung zwischen den Gehäuseteilen 8, 9 unterbinden, um letztere nach Art einer Dichtung gegeneinander abzusperren. Mit Hohlräumen sind dabei die Hohlräume oder Kanäle für die arbeitsmediumleitenden Verbindungen und/oder das Arbeitsmediumvorratsvolumen gemeint. Diese werden entsprechend gemeinsam von der Trennplatte und dem wenigstens einen Gehäusesteil 8, 9 begrenzt. Die Trennplatte 13 kann über entsprechende Bohrungen mit dem einen oder beiden Gehäuseteilen 8, 9 verbunden werden, beispielsweise durch Stifte oder Schrauben. Auch können mehr als eine Trennplatte 13 vorgesehen sein.

Der hier aus zwei Gehäuseteilen 8, 9 zusammengesetzte Arbeitsmediumbehälter 4 umschließt das Arbeitsmediumvorratsvolumen 17 sowie den Steuerdruckmediumraum 22, beispielsweise Luftraum, der dem Steuerdruckmediumraum 22 in der Figur 1 entspricht und über welchen das Arbeitsmedium im Arbeitsmediumvorratsvolumen 17 mehr oder minder mit einem Steuerdruck beaufschlagt werden kann, um dieses mehr oder minder in den Arbeitsraum des Retarders zu verdrängen.

Das erste Gehäuseteil 8 des Arbeitsmediumbehälters 4, welches vom Rotor 1 und Stator 2 des Retarders abgewandt ist, bildet ferner Leitungen 23 und Anschlüsse (nicht erkennbar) für das Steuerdruckmedium aus, sowie einen Arbeitsmediumabscheider 21, hier gebildet durch zwei seriell angeordnete Zyklonabscheider. Das zweite Gehäuseteil 9 kann natürlich an der Bildung dieser Bauteile mitwirken beziehungsweise die entsprechenden Räume im ersten Gehäuseteil 8 abdecken.

Ferner trägt das erste Gehäuseteil 8 den Wärmetauscher 15 und bildet die Verbindungsleitungen zu diesem aus. Diese sind mit denselben Bezugszeichen wie in der Figur 1 beziffert. So stellt das erste Gehäuseteil 8 die Verbindung vom Arbeitsmediumvorratsvolumen 17 zum Wärmetauscherauslass 19 her, wobei durch die gewählte Ausführungsform der Einlass in den Arbeitsmediumbehälter 4 beziehungsweise das Arbeitsmediumvorratsvolumen 17 und der Wärmetauscherauslass 19 zusammenfallen, weil nur durch eine Öffnung in der stirnseitigen Wandung des ersten Gehäuseteils 8 gebildet. Das erste Gehäuseteil 8 bildet ferner den Auslass 10 aus dem Arbeitsmediumbehälter 4 beziehungsweise dem Arbeitsmediumvorratsvolumen 17, siehe den Übergang vom Arbeitsmediumvorratsvolumen 17 in einen zylindrischen Raum, der in der Teilfuge 12 zwischen den beiden Gehäuseteilen 8, 9 geöffnet und auf der abgewandten Stirnseite des ersten Gehäuseteils 8 geschlossen ist.

Das zweite Gehäuseteil 9 verbindet diesen zylinderförmigen Raum des ersten Gehäuseteils 8, der den Auslass 10 aufweist, mit dem Stator 2 des Retarders, über welchen die Arbeitsmediumführung weiter in den Arbeitsraum (nicht erkennbar) des Retarders fortgesetzt wird.

Das zweite Gehäuseteil 9 des Arbeitsmediumbehälters 4 bildet zugleich einen ersten Teil des Retardergehäuses 14, das den Stator 2 (in der Figur 2 nicht im Detail erkennbar) umschließt und an welchem ein zweiter Teil des Retardergehäuses 14, vorliegend als Rotorgehäuse 16 bezeichnet, weil es den Rotor 1 umschließt, angeschlossen ist, insbesondere durch Verschrauben.

Zwischen den beiden Gehäuseteilen 8, 9 ist die Trennplatte 13 eingelegt, die ausgewählte Hohlräume des ersten Gehäuseteils 8 von Hohlräumen im zweiten Gehäuseteil 9 abtrennt. Andere Hohlräume hingegen werden gemeinsam durch das erste Gehäuseteil 8 und das zweite Gehäuseteil 9 gebildet.

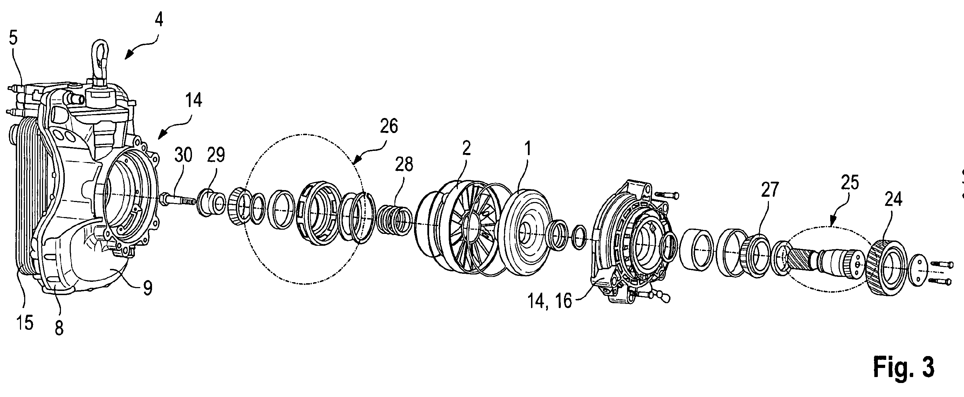

In der Figur 3 erkennt man nochmals den am ersten Gehäuseteil 8 des Arbeitsmediumbehälters 4 angeschlossenen Wärmetauscher. Ferner ist das auf derselben Stirnseite des ersten Gehäuseteils 8 angeschlossene Steuerdruckbeaufschlagungssystem 5 dargestellt.

Auf der abgewandten Stirnseite des zweiten Gehäuseteils 9 hingegen ist in Explosionsdarstellung der Anschluss beziehungsweise der Einschluss der Kreislaufteile des Retarders gezeigt. Diese weisen den Rotor 1 und den Stator 2 auf. Der Stator 2 ist in das Teil des Retardergehäuses 14 eingesetzt, der durch das zweite Gehäuseteil 9 des Arbeitsmediumbehälters 4 gebildet wird. Der Rotor 1 wird vom Rotorgehäuse 16, das an dem zweiten Gehäuseteil 9 angeflanscht ist, umschlossen. Der Antrieb des Rotors 1 erfolgt über ein vorteilhaft schräg verzahntes Ritzel 24, das auf dem dem Stator 1 beziehungsweise dem Arbeitsmediumbehälter 4 abgewandten Ende der Rotorwelle 25 positioniert ist. Die Rotorwelle 25 wird durch ein erstes Lager zwischen Arbeitsmediumvorratsvolumen 17 und Stator 2, das durch den im zweiten Gehäuseteil 9 gelagerten Stator 2 oder unmittelbar durch das zweite Gehäuseteil 9 getragen wird, gelagert, und ferner auf dem entgegengesetzten axialen Ende durch ein zweites Lager 27, das vorteilhaft jedoch derart positioniert ist, dass das Ritzel 24 fliegend auf der Rotorwelle 25 gelagert ist. Dies ist jedoch nicht zwingend notwendig.

Auf der Rotorwelle 25 ist eine Druckfeder 28 positioniert, welche ein Abfahren des Rotors 1 vom Stator 2 im Nichtbremsbetrieb bewirkt. Die Druckfeder 28 kann sich einerseits am Rotor 1 und andererseits dem ersten Lager 26, dem Retardergehäuse 14 (vorteilhaft jenem Teil, der durch das zweite Gehäuseteil 9 gebildet wird) oder dem zweiten Gehäuseteil 9 abstützen. Besonders günstig ist es jedoch, wenn ein auf die Rotorwelle 25 aufgeschraubtes Gegenlager 29 vorgesehen ist, das die Druckkräfte der Druckfeder 28 aufnimmt. Vorliegend ist das Gegenlager 29 mit einer einzigen Schraube 30 stirnseitig auf die Rotorwelle 25 aufgeschraubt.

### Bezugszeichenliste

- 1: Rotor
- 2: Stator
- 3: Arbeitsraum
- 4: Arbeitsmediumbehälter
- 5: Steuerdruckbeaufschlagungssystem
- 6,7: Arbeitsmediumanschluss
- 8,9: Gehäuseteil
- 10: Auslass
- 11: Einlass
- 12: Teilfuge
- 12.1: Trennebene
- 13: Trennplatte
- 14: Retardergehäuse
- 15: Wärmetauscher
- 16: Rotorgehäuse
- 17: Arbeitsmediumvorratsvolumen
- 18: Wärmetauschereinlass
- 19: Wärmetauscherauslass
- 20: Anschluss für ein Steuerdruckbeaufschlagungssystem
- 21: Arbeitsmediumabscheider
- 22: Steuerdruckmediumraum
- 23: Leitungen für Steuerdruckmedium
- 24: Ritzel
- 25: Rotorwelle
- 26: erstes Lager
- 27: zweites Lager
- 28: Druckfeder
- 29: Gegenlager
- 30: Schraube

## Patentansprüche

1. Hydrodynamischer Retarder, umfassend
1.1 einen beschaufelten Rotor (1) und einen beschaufelten Stator (2), die miteinander einen mit Arbeitsmedium befüllbaren und davon entleerbaren Arbeitsraum (3) ausbilden;
1.2 wenigstens einen ersten Arbeitsmediumanschluss (6) zum Zuführen von Arbeitsmedium in den Arbeitsraum (3); und einen zweiten Arbeitsmediumanschluss (7) zum Abführen von Arbeitsmedium aus dem Arbeitsraum (3);
1.3 einen Arbeitsmediumbehälter (4), der ein Arbeitsmediumvorratsvolumen (17) zur Aufnahme von momentan nicht im Arbeitsraum (3) befindlichen Arbeitsmedium begrenzt, wobei der Arbeitsmediumbehälter (4) einen Auslass (10) aufweist, der über wenigstens eine Leitung mit dem ersten Arbeitsmediumanschluss (6) arbeitsmediumleitend verbunden ist, und ferner einen Einlass (11), der über wenigstens eine Leitung mit dem zweiten Arbeitsmediumanschluss (7) arbeitsmediumleitend verbunden ist; und
1.4 der Arbeitsmediumbehälter (4) aus wenigstens zwei Gehäuseteilen (8, 9) hergestellt ist, welche entlang wenigstens einer Teilfuge (12) zusammengefügt sind; wobei
1.5 die beiden Gehäuseteile (8, 9) gemeinsam das Arbeitsmediumvorratsvolumen (17) umschließen;
1.6 wenigstens eines der beiden Gehäuseteile (9) zugleich einen Teil eines Retardergehäuses (14) bildet, das den Stator (2) trägt oder ausbildet und alle oder einen Teil der arbeitsmediumleitenden Verbindungen zwischen dem Arbeitsmediumvorratsvolumen (17) und dem Arbeitsraum (3) wenigstens teilweise ausbildet; **dadurch gekennzeichnet, dass**
1.7 zwischen den beiden Gehäuseteilen (8, 9) eine Trennplatte (13) eingelegt ist, welche zusammen mit einem oder beiden Gehäuseteilen (8, 9) Hohlräume für die arbeitsmediumleitenden Verbindungen und/oder das Arbeitsmediumvorratsvolumen (17) ausbildet.

2. Hydrodynamischer Retarder gemäß Anspruch 1, **dadurch gekennzeichnet, dass** der Retarder einen Wärmetauscher (15) aufweist und das andere Gehäuseteil (8), welches nicht das Retardergehäuse bildet, oder beide Gehäuseteile (8, 9) des Arbeitsmediumbehälters (4) eine arbeitsmediumleitende Verbindung zwischen dem Arbeitsraum (3) und einem Wärmetauschereinlass (18) des Wärmetauschers (15) ausbilden und/oder eine arbeitsmediumleitende Verbindung zwischen einem Wärmetauscherauslass (19) des Wärmetauschers (15) und dem Arbeitsmediumvorratsvolumen (17) ausbilden.

3. Hydrodynamischer Retarder gemäß Anspruch 2, **dadurch gekennzeichnet, dass** der Wärmetauscher (15) von außen an dem anderen Gehäuseteil (8) angeschlossen ist und insbesondere von diesem getragen wird.

4. Hydrodynamischer Retarder gemäß einem der Ansprüche 1 bis 3, **dadurch gekennzeichnet, dass** eines der beiden Gehäuseteile (8, 9), insbesondere das andere Gehäuseteil (8), wenigstens einen Anschluss (20) für ein Steuerdruckbeaufschlagungssystem (5) und wenigstens eine Leitung (23) für ein Steuerdruckmedium zur Beaufschlagung des Arbeitsmediumvorratsvolumens (17) mit einem Steuerdruck ausbilden/ausbildet.

5. Hydrodynamischer Retarder gemäß Anspruch 4, **dadurch gekennzeichnet, dass** in der wenigstens einen Leitung (23) für das Steuerdruckmedium ein durch eines oder beide Gehäuseteile (8, 9) gebildeter oder in dieses/diese eingesetzter Arbeitsmediumabscheider (21) vorgesehen ist.

6. Hydrodynamischer Retarder gemäß einem der Ansprüche 1 bis 5, **dadurch gekennzeichnet, dass** das Retardergehäuse (14) wenigstens einen zweiten an einem der beide Gehäuseteile (9) angeschlossenen Teil (16) aufweist, das den Rotor (1) umschließt.

7. Hydrodynamischer Retarder gemäß einem der Ansprüche 1 bis 6, **dadurch gekennzeichnet, dass** zwischen den Gehäuseteilen (8, 9) wenigstens eine Dichtung eingebracht ist, um einzelne Hohlräume gegeneinander abzudichten.

8. Hydrodynamischer Retarder gemäß Anspruch 7, **dadurch gekennzeichnet, dass** die wenigstens eine Dichtung von der Trennplatte (13) ausgebildet wird.

9. Hydrodynamischer Retarder gemäß einem der Ansprüche 1 bis 8, **dadurch gekennzeichnet, dass** die Teilfuge (12) in Einbaulage des hydrodynamischen Retarders im Wesentlichen vertikal verläuft und/oder ausschließlich in einer Trennebene (12.1), welche vertikal verläuft, angeordnet ist und insbesondere die Trennplatte (13) ebenfalls innerhalb oder parallel zu der Teilfuge (12) oder zu der Trennebene (12.1) verläuft.

10. Hydrodynamischer Retarder gemäß einem der Ansprüche 1 bis 9, **dadurch gekennzeichnet, dass** die Gehäuseteile (8, 9) durch Urformen, insbesondere in einem einzigen Arbeitsschritt, einem einzigen Werkzeug und/oder einer einzigen Maschine hergestellt sind.

11. Hydrodynamischer Retarder gemäß einem der Ansprüche 1 bis 7, **dadurch gekennzeichnet, dass** die Gehäuseteile (8, 9) im Druckgussverfahren hergestellt sind, insbesondere aus Aluminium oder einer Aluminiumlegierung.

12. Verfahren zum Herstellen eines hydrodynamischen Retarders gemäß einem der Ansprüche 1 bis 11, **dadurch gekennzeichnet, dass** die beiden Gehäuseteile (8, 9) des Arbeitsmediumbehälters (4) im Druckgussverfahren hergestellt werden.

13. Verfahren gemäß Anspruch 12, **dadurch gekennzeichnet, dass** auch die Teile des Retardergehäuses (14, 16) im Druckgussverfahren hergestellt werden.

## Claims

1. A hydrodynamic retarder, comprising
1.1 a bladed rotor (1) and a bladed stator (2), which form together a working chamber (3) which can be filled with working medium and emptied thereof;
1.2 at least one first working medium connection (6) for feeding working medium into the working chamber (3); and a second working medium connection (7) for discharging working medium from the working chamber (3);
1.3 a working medium container (4), which limits a working medium storage volume (17) for accommodating working medium which is not situated in the working chamber (3) at that time, wherein the working medium container (4) comprises an outlet (10), which is connected via at least one line to the first working medium connection (6) for conveying the working medium, and moreover one inlet (11), which is connected via at least one line to the second working medium connection (7) for conveying the working medium;
and
1.4 the working medium container (4) consists of at least two housing parts (8, 9), which are assembled along at least one parting line (12);
wherein
1.5 both housing parts (8, 9) enclose together the working medium storage volume (17);
1.6 at least one of both housing parts (9) forms simultaneously a portion of a retarder housing (14), which carries or forms the stator (2) and forms all the connections for conveying the working fluid, or a portion of the latter, between the working medium storage volume (17) and the working chamber (3) at least partially; **characterised in that**
1.7 a separating plate (13) is inserted between both housing parts (8, 9), which plate forms together with one or both housing parts (8, 9) cavities for the working medium-conducting connections and/or the working medium storage volume (17).

2. A hydrodynamic retarder according to claim 1, **characterised in that** the retarder comprises a heat exchanger (15) and the other housing part (8) which does not form the retarder housing or both housing parts (8, 9) of the working medium container (4) form a connection for conveying the working medium between the working chamber (3) and a heat exchanger inlet (18) of the heat exchanger (15), and/or form a connection for conveying the working medium between a heat exchanger outlet (19) of the heat exchanger (15) and the working medium storage volume (17).

3. A hydrodynamic retarder according to claim 2, **characterised in that** the heat exchanger (15) is connected to the other housing part (8) from the outside and in particular is carried by said housing part.

4. A hydrodynamic retarder according to one of claims 1 to 3, **characterised in that** one of both housing parts (8, 9), in particular the other housing part (8), form/forms at least one connection (20) for a control pressure application system (5) and at least one line (23) for a control pressure medium for operating the working medium storage volume (17) with a control pressure.

5. A hydrodynamic retarder according to claim 4, **characterised in that** a working medium separator (21), formed by one or both housing parts (8, 9) or inserted into said housing part or parts, is provided in said at least one line (23) for the control pressure medium.

6. A hydrodynamic retarder according to one of claims 1 to 5, **characterised in that** the retarder housing (14) comprises at least one second portion (16) connected to one of both housing parts (9), which encloses the rotor (1).

7. A hydrodynamic retarder according to one of claims 1 to 6, **characterised in that** at least one seal is mounted between the housing parts (8, 9) for sealing individual cavities relative to one another.

8. A hydrodynamic retarder according to claim 7, **characterised in that** said at least one seal is formed of the separating plate (13).

9. A hydrodynamic retarder according to one of claims 1 to 8, **characterised in that** the parting line (12) runs more or less vertically in the mounting position of the hydrodynamic retarder and/or is arranged exclusively in a separation plane (12.1) which runs vertically, and in particular the separating plate (13) also runs inside or parallel to the parting line (12) or to the separation plane (12.1).

10. A hydrodynamic retarder according to one of claims 1 to 9, **characterised in that** the housing parts (8, 9) are obtained by casting, in particular in a single working step, a single tool and/or a single machine.

11. A hydrodynamic retarder according to one of claims 1 to 7, **characterised in that** the housing parts (8, 9) are produced in a pressure casting process, in particular of aluminium or an aluminium alloy.

12. A method for manufacturing a hydrodynamic retarder according to one of the claims 1 to 11, **characterised in that** both housing parts (8, 9) of the working medium container (4) are produced in a pressure casting process.

13. A method according to claim 12, **characterised in that** the parts of the retarder housing (14, 16) are also produced in a pressure casting process.

## Revendications

1. Retardateur hydrodynamique comprenant
1.1 un rotor muni de pales (1) et un stator muni de pales (2), qui forment ensemble un espace de travail (3) qui peut être rempli avec un fluide de travail et vidé de celui-ci ;
1.2 au moins un premier raccord de fluide de travail (6) pour conduire le fluide de travail dans l'espace de travail (3) et un deuxième raccord de fluide de travail (7) pour évacuer un fluide de travail de l'espace de travail (3) ;
1.3 un réservoir de fluide de travail (4), qui délimite un volume de réserve de fluide de travail (17) pour recevoir le fluide de travail qui n'est pas situé dans l'espace de travail (3) à ce moment, lequel réservoir de fluide de travail (4) comprend une sortie (10) qui est raccordée via au moins une conduite au premier raccord de fluide de travail (6) pour acheminer le fluide de travail, ainsi qu'une entrée (11) qui est raccordée via au moins une conduite au deuxième raccord de fluide de travail (7) pour acheminer le fluide de travail ;
et
1.4 le réservoir du fluide de travail (4) se composant d'au moins deux parties de logement (8, 9), qui sont assemblées le long d'au moins un joint (12) ; dans lequel
1.5 les deux parties de logement (8, 9) renferment ensemble le volume de réserve de fluide de travail (17) ;
1.6 au moins une des deux parties de logement (9) forme simultanément une partie d'un corps de retardateur (14), qui porte ou forme le stator (2) et forme au moins partiellement tout ou partie des raccords acheminant le fluide de travail entre le volume de réserve de fluide de travail (17) et l'espace de travail (3) ;
**caractérisé en ce que**
1.7 une plaque de séparation (13) est insérée entre les deux parties de logement (8, 9), ladite plaque formant avec une ou les deux parties de logement (8, 9) des cavités pour les raccords acheminant le fluide de travail et/ou le volume de réserve de fluide de travail (17).

2. Retardateur hydrodynamique selon la revendication 1, **caractérisé en ce que** le retardateur comprend un échangeur thermique (15) et l'autre partie de logement (8) ou les deux parties de logement (8, 9) du réservoir de fluide de travail (4) forment un raccord acheminant le fluide de travail entre l'espace de travail (3) et une entrée d'échangeur thermique (18) de l'échangeur thermique (15) et/ou forment un raccord acheminant le fluide de travail entre une sortie d'échangeur thermique (19) de l'échangeur thermique (15) et le volume de réserve de fluide de travail (17).

3. Retardateur hydrodynamique selon la revendication 2, **caractérisé en ce que** l'échangeur thermique (15) est raccordé à l'autre partie du logement (8) par l'extérieur, et en particulier porté par ladite partie de logement.

4. Retardateur hydrodynamique selon l'une des revendications 1 à 3, **caractérisé en ce qu'**une des deux parties de logement (8, 9), en particulier l'autre partie de logement (8), forme au moins un raccord (20) pour un système d'application de pression de commande (5) et au moins une conduite (23) pour un fluide sous pression de commande destiné à exercer une pression de commande sur le volume de réserve de fluide de travail (17).

5. Retardateur hydrodynamique selon la revendication 4, **caractérisé en ce qu'**un séparateur de fluide de travail (21), formé par une ou les deux parties de logement (8, 9) ou inséré dans celles-ci, est prévu dans au moins une conduite (23) de fluide sous pression de commande.

6. Retardateur hydrodynamique selon l'une des revendications 1 à 5, **caractérisé en ce que** le corps du retardateur (14) comprend au moins une deuxième partie (16) raccordée à une des deux parties de logement (9), qui renferme le rotor (1).

7. Retardateur hydrodynamique selon l'une des revendications 1 à 6, **caractérisé en ce qu'**au moins une garniture d'étanchéité est montée entre les parties de logement (8, 9), pour l'étanchéité des différentes cavités les unes par rapport aux autres.

8. Retardateur hydrodynamique selon la revendication 7, **caractérisé en ce qu'**au moins une garniture d'étanchéité est formée par la plaque de séparation (13).

9. Retardateur hydrodynamique selon l'une des revendications 1 à 8, **caractérisé en ce que** le joint (12) passe de façon sensiblement verticale dans la position de montage du retardateur hydrodynamique et/ou est disposé exclusivement dans un plan de séparation (12.1) qui passe verticalement, et en particulier la plaque de séparation (13) passe aussi à l'intérieur ou parallèlement au joint (12) ou au plan de séparation (12.1).

10. Retardateur hydrodynamique selon l'une des revendications 1 à 9, **caractérisé en ce que** les parties de logement (8, 9) sont obtenues par moulage, en particulier en une seule étape de travail, avec un seul outil et/ou dans une seule machine.

11. Retardateur hydrodynamique selon l'une des revendications 1 à 7, **caractérisé en ce que** les parties de logement (8, 9) sont produites selon un procédé de moulage sous pression, en particulier à partir d'aluminium ou d'un alliage d'aluminium.

12. Procédé pour fabriquer un retardateur hydrodynamique selon l'une des revendications 1 à 11, **caractérisé en ce que** les deux parties de logement (8, 9) du réservoir de fluide de travail (4) sont produites selon un procédé de moulage sous pression.

13. Procédé selon la revendication 12, **caractérisé en ce que** les parties du corps du retardateur (14, 16) sont aussi produites selon un procédé de moulage sous pression.
